**Europäisches Patentamt**

**European Patent Office**

**Office européen des brevets**

(19)

(11) Veröffentlichungsnummer: **0 118 730**
**B1**

# (12) EUROPÄISCHE PATENTSCHRIFT

(45) Veröffentlichungstag der Patentschrift:
20.05.87

(51) Int. Cl.⁴: **G 06 K 13/04,** G 06 K 13/08

(21) Anmeldenummer: **84101075.4**

(22) Anmeldetag: **02.02.84**

(54) **Wendeeinrichtung für einen flachen Gegenstand.**

(30) Priorität: **03.02.83 DE 3303672**

(43) Veröffentlichungstag der Anmeldung:
**19.09.84 Patentblatt 84/38**

(45) Bekanntmachung des Hinweises auf die Patenterteilung:
**20.05.87 Patentblatt 87/21**

(84) Benannte Vertragsstaaten:
**DE FR GB IT NL SE**

(56) Entgegenhaltungen:
**FR-A-2 315 131**
**US-A-3 744 614**

(73) Patentinhaber: **Nixdorf Computer
Aktiengesellschaft, Fürstenallee 7, D-4790
Paderborn (DE)**

(72) Erfinder: **Kramer, Gerd, Am Allemannsberg 3,
D-4791 Atteln (DE)**
Erfinder: **Meier, Johannes Ferdinand,
Fontanestrasse 1, D-4793 Büren (DE)**

(74) Vertreter: **Patentanwälte Schaumburg & Thoenes,
Mauerkircherstrasse 31 Postfach 86 07 48, D-8000
München 80 (DE)**

## Beschreibung

Die Erfindung betrifft eine Wendeeinrichtung für einen flachen Gegenstand der im Oberbegriff des Anspruchs 1 genannten Art.

Die Aufgabe derartiger Wendeeinrichtungen ist es, einen Gegenstand, welcher in einer mehr oder weniger beliebigen Lage angeliefert wird, in eine bestimmte, für dessen Weiterbehandlung erforderliche Lage zu drehen. Es kann sich dabei beispielsweise um zu verpackende Gegenstände, zu stempelnde Briefe, zu projizierende Diapositive oder in einem Abspielgerät abzuspielende Tonbandkassetten handeln. Ein wichtiger Anwendungsfall sind vor allem Datenträger-Karten, welche als persönliche Kennkarten, Kreditkarten und dergleichen Verwendung finden.

Da die aufgezählten Gegenstände sich im wesentlichen in einer Hauptebene erstrecken oder, mit anderen Worten, eine flache Form haben, können sie im allgemeinen im Aufnahmefach der Aufnahmevorrichtung keine beliebige Lage einnehmen, sondern sie weisen eine bestimmte Vororientierung auf, so daß sie jeweils nur seitenverkehrt und in ihrer Hauptebene verdreht sein können.

Es ist bereits eine Wendeeinrichtung der gattungsgemäßen Art bekannt, welche zum Wenden von maschinenlesbaren Fahrkarten dient (FR-A1-2 315 131).

Die bekannte Wendeeinrichtung weist eine Aufnahmevorrichtung für die Fahrkarte auf, die um eine in der Hauptebene der Fahrkarte liegende Querachse um 180° gedreht werden kann. Damit ist es demnach nicht möglich, die Fahrkarte aus jeder beliebigen Falschlage, die sie in der Wendevorrichtung einnehmen kann, in die richtige Lage zu drehen. Wenn beispielsweise die Fahrkarte so eingeführt wird, daß die beiden senkrecht zur Wendeachse liegenden Längskanten der Fahrkarte vertauscht sind, so bleiben diese Längskanten beim Wenden vertauscht.

Es ist die Aufgabe der vorliegenden Erfindung, eine Wendeeinrichtung der gattungsgemäßen Art zuschaffen, welche es erlaubt, einen in jeder beliebigen möglichen Lage und Orientierung in die Einrichtung eingeführten flachen Gegenstand in seine zum Auswerten oder Weiterverarbeiten erforderliche Lage zu bringen.

Diese Aufgabe ist erfindungsgemäß durch die im Kennzeichen des Anspruchs 1 enthaltenen Merkmale gelöst.

Es ist zwar auch schon eine Einrichtung bekannt, in der flache Gegenstände, in diesem Falle Briefe, um zwei Achsen gedreht werden können, so daß sie ebenfalls aus jeder möglichen Anfangslage in die korrekte Leselage gedreht werden können (DE-AS 12 13 797). Dazu durchläuft jeder Brief jedoch eine sehr aufwendige Anlage, in der er in mehreren hintereinander angeordneten Einzelvorrichtungen ausgerichtet wird. Alle Briefe werden zunächst in Taschen aufgenommen, die eine Drehung der Briefe in ihrer Ebene bewirken. Sodann werden die Briefe nochmals nach seitenrichtig bzw. seitenverkehrt liegenden Stücken sortiert, wobei die seitenverkehrt liegenden Briefe über einen gesonderten Wendekanal geführt und dann mit der Reihe der seitenrichtig liegenden Briefe wieder vereinigt werden. Es ist ganz offensichtlich, daß diese bekannte Einrichtung äußerst aufwendig konstruiert und für eine schnelle Verarbeitung großer Mengen von Dokumenten ausgelegt ist.

Die Lösung gemäß vorliegender Erfindung ist demgegenüber wesentlich einfacher, da sie die erforderlichen Drehbewegungen in einer einzigen Aufnahmevorrichtung durchführt.

Der Gegenstand kann in dem seiner flachen Form angepaßten Aufnahmefach nur einige bestimmte Lagen einnehmen, wie schon beschrieben wurde. Bei einem z.B. für Datenträger-Karten üblichen Rechteckformat sind es vier verschiedene Lagen, nämlich in seitenrichtiger Stellung zwei um 180° zu ihrer Hauptebene verdrehte Lagen sowie in seitenverkehrter Stellung zwei um 180° in ihrer Hauptebene verdrehte Lagen. Es läßt sich einfach zeigen, daß die Karte aus jeder Falschlage durch zwei Drehbewegungen in ihre Leselage bewegt werden kann.

Die Wendeeinrichtung ist in einer bevorzugten Ausgestaltung der Erfindung als Aufnahmekapsel ausgebildet, wobei die Drehbewegung durch Antriebsmittel bewerkstelligt wird, die beispielsweise durch Lagesignale angesteuert werden, die von an dem Gegenstand angeordneten Markierungen abgeleitet werden, wie weiter unten näher erläutert wird. Die bekannte Lösung gemäß FR-A1-2 315 131 zeigt zwar auch schon eine Aufnahmekapsel; diese ist jedoch entsprechend der gegenüber der erfindungsgemäßen Wendevorrichtung einfacheren Bewegungsmöglichkeit nur mit Antriebsmitteln und Lagerungsmitteln zum Drehen um eine Wendeachse ausgebildet, während die erfindungsgemäße Aufnahmekapsel mit einer Lagerung und mit Antriebsmitteln ausgestattet ist, die eine Drehung um zwei Achsen erlauben.

Die Kapsel ist vorzugsweise als allseitig drehbar im Gehäuse gelagerte Kugel ausgebildet mit einem die Kugel durchdringenden schlitzförmigen Aufnahmefach in der Äquatorebene. Diese Kugel wird durch zwei Reibradantriebe gedreht. Die Reibräder können jeweils mit eigenen Antriebsmotoren versehen sein.

In einer bevorzugten Ausgestaltung ist jedoch vorgesehen, daß beide Reibräder über eine nacheinander zu diesen geführte flexible Antriebswelle mit einem einzigen Antriebsmotor verbunden sind und daß Mittel zum wahlweisen Andrücken und Abheben der Reibräder vorgesehen sind. Diese Mittel zum Andrücken und Abheben können beispielsweise jeweils am Gehäuse angeordnete schaltbare Elektromagneten umfassen, deren bewegliches

Teil jeweils mit dem beweglich gelagerten Reibrad verbunden ist. Die Reibräder stellen sehr einfache und billige Bauteile dar. Insbesondere ermöglichen sie es in einfacher Weise, die jeweils nicht antreibenden Reibräder von der Kugeloberfläche abzuheben und sie bei Bedarf wieder auf die Kugeloberfläche aufzusetzen, wobei eine exakte gegenseitige Positionierung, wie sie etwa bei Zahnradantrieben gemäß der FR-A1-2 315 131 zur Vermeidung des Zusammentreffens von zwei Zahnelementen erforderlich wäre, nicht erforderlich ist.

In einer anderen Ausgestaltung der Erfindung ist vorgesehen, daß die Kugel eine in der Äquatorebene angeordnete erste Umfangsnut sowie eine in einer Meridianebene angeordnete zweite Umfangsnut aufweist, in die jeweils mit einem Drehantrieb verbundene Nutensteine oder dergleichen ständig formschlüssig eingreifen. Jeder dieser Nutensteine ist im Durchstoßpunkt einer Drehachse durch die Kugeloberfläche angeordnet. Bei einer Verdrehung eines Nutensteines nimmt er die Kugel in der zugeordneten Drehachse mit, während der jeweils andere Nutenstein diese Drehung nicht behindert, da er in der entsprechenden Umfangsnut entlanggleitet, wie weiter unten genauer beschrieben wird. Jeder dieser Nutensteine kann mit einem eigenen Drehantrieb verbunden sein; in bevorzugter Ausgestaltung sind jedoch die beiden Nutensteine über flexible Antriebswellen mit einem einzigen, in zwei Drehrichtungen betreibbaren Antriebsmotor verbunden, wobei die Antriebswellen jeweils über in entgegengesetzter Drehrichtung des Antriebsmotors kuppelnde Freiläufe mit den Nutensteinen antriebsverbunden sind. Der Antriebsmotor kann demnach in einer Drehrichtung den ersten Nutenstein, in der anderen Drehrichtung den zweiten Nutenstein verdrehen.

In einer anderen Ausgestaltung ist die Aufnahmekapsel als ein um seine Längsachse sowie um eine dazu senkrechte zweite Achse drehbar im Gehäuse gelagerter Zylinderkörper ausgebildet, welcher in einer zur zweiten Achse senkrechten Längssymmetrieebene ein den Zylinderkörper durchdringendes schlitzförmiges Aufnahmefach für die Karte aufweist. Um die Drehung des Zylinderkörpers um die beiden Achsen zu ermöglichen, liegt er mit seiner Mantelfläche auf mehreren frei drehbaren Stützrollen auf, welche ihrerseits auf einem um die zweite Achse drehbar im Gehäuse gelagerten Traggestell gelagert sind. Ein erster Drehantrieb ist als Riemenantrieb mit einem über den Zylinderkörper sowie ein mit einem Antriebsmotor verbundenes Antriebsrad geführten Antriebsriemen ausgebildet, während der zweite Drehantrieb eine am Traggestell angeordnete koaxial zur zweiten Achse ausgerichtete und mit einem Antriebsmotor verbindbare Antriebswelle umfaßt. Auch hier besteht grundsätzlich die Möglichkeit, jeden Drehantrieb mit einem eigenen Antriebsmotor auszustatten. In einer bevorzugten Ausgestaltung ist jedoch vorgesehen, daß das Antriebsrad des ersten Drehantriebes und die Antriebswelle des zweiten Drehantriebes über schaltbare Getriebemittel mit einem einzigen Antriebsmotor wahlweise kuppelbar sind. Diese schaltbaren Getriebemittel können beispielsweise über Schaltmagnete bewegliche Zwischenritzel umfassen, welche jeweils eine Verbindung zwischen Antriebsmotor und Drehantrieb herstellen.

Die Antriebsmotoren sind vorzugsweise als elektrische Schrittmotoren ausgebildet, welche an sich schon eine sehr genaue Positionierung erlauben. Zur exakten Lagefixierung der Aufnahmekapsel sind jedoch erfindungsgemäß jeweils in den verschiedenen Sollagen derselben wirksame Rasteinrichtungen vorgesehen.

Zum Transportieren des Gegenstandes durch die Wendeeinrichtung ist die Kapsel erfindungsgemäß mit Transportelementen versehen. Diese best-' ·· ·zugsweise aus zwei zusammenwirkenden, jeweils oberhalb bzw. unterhalb des Aufnahmefaches in entsprechenden Ausnehmungen innerhalb der Kapsel angeordneten Transportrollen, welche senkrecht zur Ebene des Aufnahmefaches und in Transportrichtung ausgerichtet sind. Diese reichen jeweils einerseits bis in das Aufnahmefach, andererseits bis zur Kapselperipherie, wo sie mit einem Antriebsrad in Eingriff gebracht werden können, welches mit einem Antriebsmotor in Verbindung steht. Dieses Antriebsrad ist vorzugsweise ebenfalls als Reibrad ausgebildet und wahlweise an eine Transportrolle andrückbar oder von dieser abhebbar.

In einer Ausgestaltung der Erfindung ist das Transportantriebsrad beispielsweise über eine flexible Welle ebenfalls mit dem Antriebsmotor der Drehantriebe zum Drehen der Kapsel verbunden.

In weiterer Ausgestaltung der Erfindung sind der Wendestation Mittel zum Erkennen der Lage des Gegenstandes sowie Mittel zur Aussteuerung der Antriebsmittel zum Drehen der Aufnahmekapsel zugeordnet. Bei einer Einrichtung zum Wenden einer Datenträgerkarte durchläuft diese beispielsweise nacheinander eine die Mittel zum Erkennen der Lage der Karte enthaltende Erkennungsstation, eine die Wendeeinrichtung enthaltende Wendestation sowie eine nachgeordnete Lesestation. Erkennungsstation und Wendestation können auch räumlich zu einer Station zusammengefaßt sein. Die Mittel zum Erkennen der Lage der Karte umfassen beispielsweise mehrere in der Erkennungsstation angeordnete Erkennungssensoren, von denen jeder bei einer bestimmten Lage der Karte mit einer daran angeordneten Markierung zusammenwirkt. Wenn die Karte in an sich bekannter Weise rechteckig ausgebildet ist, genügt es, daß die Kapsel um jede der beiden Drehachsen in zwei um jeweils 180° verschiedene Positionen einstellbar ist, um die Karte aus jeder beliebigen Lage in die Leselage zu drehen.

Die Markierungen auf dem Gegenstand können von beliebiger Art, beispielsweise als lichtdurchlässige Fenster oder als Lochung ausgebildet sein, die von geeigneten Sensoren gelesen und in Signale für die Wendeeinrichtung umgewandelt werden. In bevorzugter Ausgestaltung wird die Markierung durch eine Magnetspur gebildet.

Weitere Vorteile und Merkmale der Erfindung ergeben sich aus den Ansprüchen, der Zeichnung sowie der Zeichnungsbeschreibung. Mehrere Ausführungsbeispiele sind in der Zeichnung dargestellt und im folgenden näher beschrieben. Es zeigen:

Fig. 1 schematisch eine Einrichtung mit einer Erkennungsstation, einer eine Wendeeinrichtung enthaltende Wendestation sowie einer Lesestation in einer Draufsicht;

Fig. 2 eine Wendestation gemäß Fig. 1 in einer Ansicht entsprechend dem Pfeil II;

Fig. 3 eine Seitenansicht einer Wendestation gemäß Fig. 2;

Fig. 4 eine Draufsicht auf eine Wendestation gemäß den Fig. 2 bis 4;

Fig. 5 einen Längsschnitt durch eine Wendestation gemäß den Fig. 2 bis 4;

Fig. 6 eine andere Ausführung einer Wendestation in einer Ansicht entsprechend Fig. 2;

Fig. 7 eine andere Ausführung einer Wendestation in einer Ansicht entsprechend Fig. 2;

Fig. 8 eine Wendestation gemäß Fig. 7 in einer Seitenansicht;

Fig. 9 eine Wendestation gemäß den Fig. 7 und 8 in einer Untersicht.

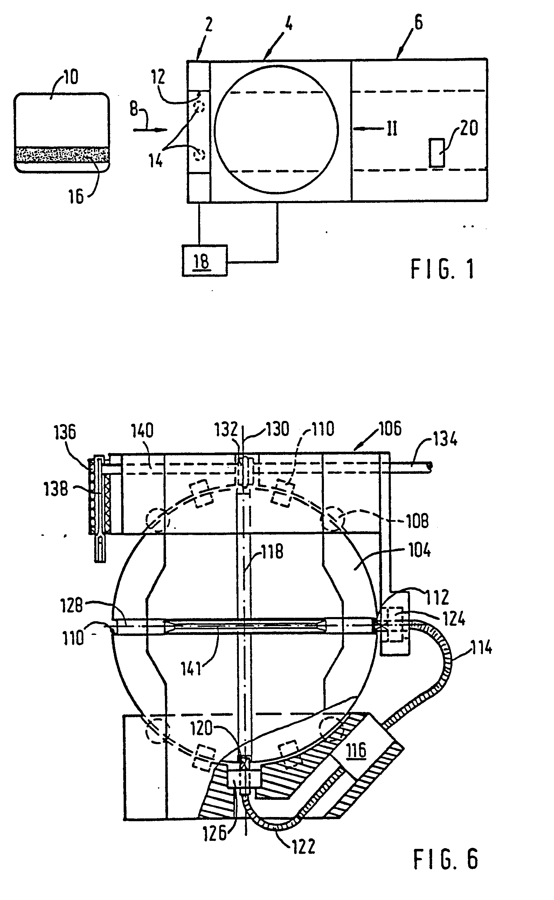

Die in Fig. 1 schematisch dargestellte Einrichtung umfaßt eine Erkennungsstation 2, eine Wendestation 4 sowie eine Lesestation 6, welche in der durch den Pfeil 8 angedeuteten Laufrichtung der Karte 10 hintereinander angeordnet sind. In der Erkennungsstation 2 ist ein Durchtrittsschlitz 12 ausgebildet, welcher einen Durchtritt der Karte 10 zur Wendestation 4 erlaubt. In der oberen Begrenzungswand des Druchtrittsschlitzes 12 sind zwei Erkennungssensoren 14, in der unteren Begrenzungswand zwei weitere, von den Erkennungssensoren 14 abgedeckte Erkennungssensoren angeordnet. Die Karte 10 ist mit einer als Magnetspur ausgebildeten Markierung 16 versehen. Bei jeder beliebigen möglichen Lage der Karte 10 wirkt ein anderer der vier Erkennungssensoren 14 mit der Markierung 16 zusammen, so daß vier unterschiedliche, den möglichen Lagen der Karte 10 entsprechende Signale gebildet werden können. Diese werden in einer Auswertelogik 18 in Befehle für die Wendestation 4 umgewandelt, in der die Karte in ihre korrekte Leselage gedreht wird. Sodann wird die Karte durch hier nicht näher dargestellte Transportmittel in die Lesestation 6 weitergegeben, wo durch einen Lesekopf 20 die auf der Karte 10 enthaltenen Informationen gelesen werden. Nach dem Lesen wird die Karte beispielsweise in Richtung des Pfeiles 8 aus der Lesestation 6 ausgeschoben oder entgegen dieser Richtung zurückbefördert und aus der Erkennungsstation 2 wieder ausgeworfen.

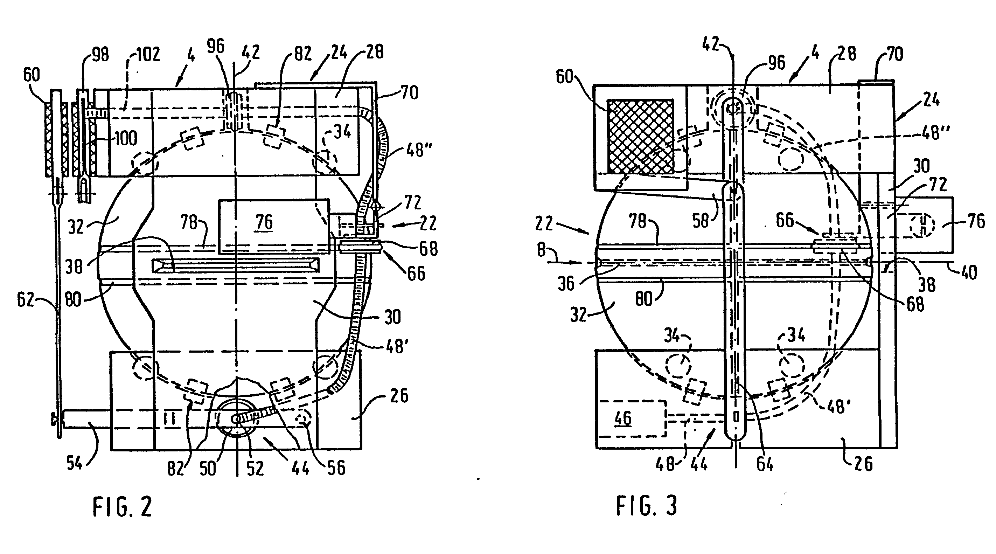

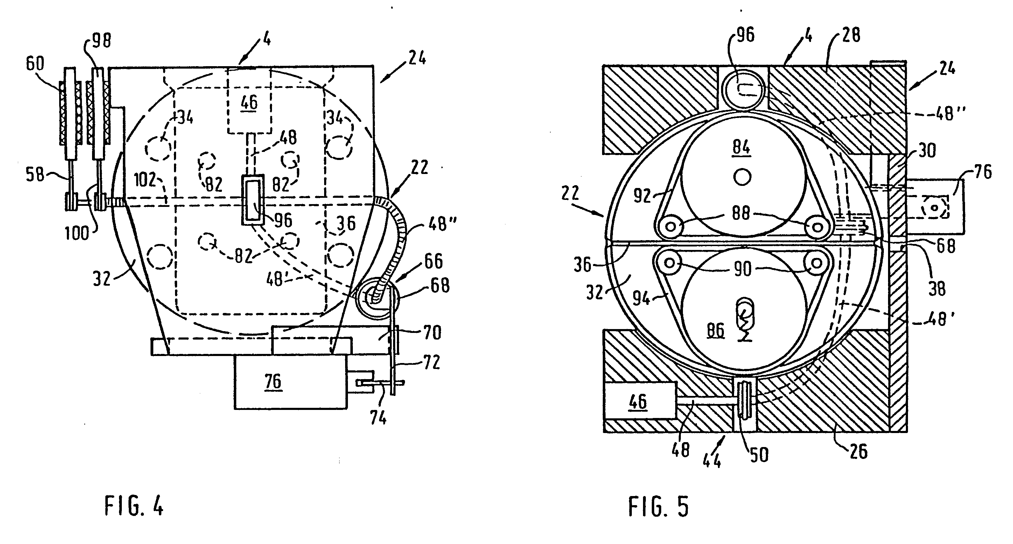

Die Fig. 2 bis 5 zeigen eine Wendestation 4 in verschiedenen ansichten. Diese Wendestation 4 enthält eine Wendeeinrichtung 22, welche die Karte 10 aufnimmt und entsprechend dem aus der Erkennungsstation kommenden Befehl in ihre Leselage dreht. Die Wendeeinrichtung 22 umfaßt ein Gehäuse 24, welches im wesentlichen aus einem Fußteil 26, einem Kopfteil 28 und einer diese verbindenden Rückwand 30 besteht. Fußteil 26 und Kopfteil 28 sind jeweils mit einer kugelkalottenförmigen Ausnehmung zur Aufnahme der als Kugel 32 ausgebildeten Aufnahmekapsel versehen. Die Kugel 32 ist im Gehäuse 24 allseitig drehbar gelagert. Diese Lagerung erfolgt über mehrere im Gehäuse 24 angeordnete Lagerkugeln 34, welche gegen die Kugeloberfläche anliegen. Dabei ist vorgesehen, daß wenigstens einige der Lagerkugeln federnd gegen die Kugeloberfläche gedrückt werden und daß die Federvorspannung veränderbar ist, wie nicht näher dargestellt wurde. Die Kugel 32 weist in ihrer Äquatorebene ein die Kugel ganz durchdringendes; schlitzförmiges Aufnahmefach 36 auf, dessen Breite im wesentlichen der Breite der Karte 10 entspricht. Die Karte 10 tritt in Richtung des Pfeiles 8 (siehe Fig. 1 und 3), aus der Erkennungsstation 2 kommend, in das Aufnahmefach 36 ein, worauf sich die Kugel 32 so dreht, daß die Karte 10 die für die nachfolgende Lesestation 6 korrekte Leselage einnimmt. Dann wird die Karte 10 durch den in der Rückwand 30 ausgebildeten Schlitz 38 hindurch in die der Wendestation 4 nachgeordnete, in den Fig. 3 und 5 rechts von dieser angeordnete Lesestation befördert.

Die Kugel 32 ist um eine in der Äquatorebene liegende erste Achse 40 sowie um eine dazu senkrecht stehende zweite Achse 42 drehbar. Die Drehung um die erste Achse 40 wird durch einen ersten Drehantrieb 44 bewirkt, welcher im wesentlichen ein mit einem Antriebsmotor 46 über eine flexible Antriebswelle 48 in Verbindung stehendes Reibrad 50 umfaßt. Die Achse 52 des Reibrades 50 ist auf einem Hebel 54 gelagert, welcher seinerseits bei 56 schwenkbar im Fußteil 26 gelagert ist. Am Hebel 54 greift eine mit dem beweglichen Teil 58 eines Schaltmagneten 60 verbundene Verbindungsstange 62 an. Bei Betätigung des Schaltmagneten 60 wird der Hebel 54 nach oben gezogen und das Reibrad 50 gegen die Kugeloberfläche angedrückt. Auf der Kugeloberfläche ist eine Laufspur 64 ausgebildet, in welche das Reibrad 50 eingreift und die eine einwandfreie Führung des Reibrades 50 auf der Kugeloberfläche garantiert.

Der zweite Drehantrieb 66 für die Drehung der Kugel um die zweite Achse 42 umfaßt ein Reibrad 68, welches über Hebel 70, 72 mit dem beweglichen Teil 74 eines Schaltmagneten 76 verbunden ist und durch diesen zwischen einer gegen die Kugeloberfläche angedrückten bzw. von dieser abgehobenen Lage bewegbar ist. Das Reibrad 68 ist über die über das Reibrad 50 hinausgeführte flexible Welle 48' ebenfalls mit dem Antriebsmotor 46 verbunden. Wie die Fig. 2, 3 und 5 erkennen lassen, ist das Reibrad 68 etwas oberhalb der Äquatorebene der Kugel 32 und damit frei von dem die Kugel durchsetzenden schlitzförmigen Aufnahmefach 36 angeordnet. Zur Führung des Reibrades 68 sind zwei in entsprechendem Abstand von der Äquatorialebene der Kugel angeordnete Laufspuren 78, 80 vorgesehen. Wenn die Kugel 32 aus der in den Fig. 2 bis 5 dargestellten Lage um 180° um die Achse 40 gedreht wird, vertauschen die beiden Laufspuren 78, 80 ihre Lage.

Die Karte 10 kann in vier verschiedenen Lagen, jeweils in Längsrichtung, in die Wendeeinrichtung 22 eingeführt werden, nämlich mit der Oberseite nach oben oder nach unten, sowie mit der Vorderkante nach vorne bzw. nach hinten. Wenn die Karte mit der falschen Seite nach oben liegt, genügt eine Drehung um die Achse 40. Wenn sie mit ihrer Vorderkante nach hinten liegt, ist eine Drehung um die Achse 42 erforderlich. Bei Vorliegen beider Fehler muß jeweils eine Drehung um jede der beiden Achsen 40, 42 und 180° vorgenommen werden. Die Drehung wird dadurch bewirkt, daß entweder das Reibrad 50 oder das Reibrad 68 oder beide nacheinander gegen die Kugeloberfläche angedrückt und durch den Antriebsmotor 46 angetrieben werden. Der Antriebsmotor 48 ist als Schrittmotor ausgebildet, welcher eine sehr genaue Positionierung der Kugel 32 ermöglicht. Die genaue Lagefixierung der Kugel 32 im Gehäuse 24 erfolgt jedoch über die Rasteinrichtungen 82, welche jeweils aus einem im Gehäuse 24 sowie einem auf der Kugeloberfläche angeordneten Permanentmagneten bestehen, welche jeweils unterschiedliche Polung aufweisen. Wenn die Kugel 32 durch den Antriebsmotor 46 in ihre annähernd richtige Sollage gedreht worden ist, wird sie durch diese Rasteinrichtungen justiert und fixiert. Die Rasteinrichtungen können auch in an sich bekannter Weise durch Rastkugeln und Rastausnehmungen gebildet sein, wie nicht näher dargestellt zu werden braucht.

Zum Transport der Karte 10 dienen zwei innerhalb der Kugel in entsprechenden Ausnehmungen drehbar gelagerte Transportrollen 84, 86. Die Karte wird entweder direkt zwischen diesen Transportrollen transportiert oder wie im dargestellten Ausführungsbeispiel (Fig. 5) durch jeweils über die Transportrollen 84 bzw. 86 sowie diesen zugeordnete Umlenkrollen 88 bzw. 90 geführte Förderbänder 92 bzw. 94. Wie Fig. 5 erkennen läßt, liegen die Förderbänder 92, 94 im Bereich des Aufnahmefaches 36 mehr oder weniger fest gegeneinander an, so daß sie die erforderliche Reibkraft zur Mitnahme der Karte 10 aufbringen.

Für den Antrieb der Transportrollen 84, 86 dient ein mit der jeweils oberen Transportrolle in Eingriff bringbares Reibrad 96. Der Antrieb des Reibrades 96 erfolgt über die über das Reibrad 68 hinausgeführte, mit dem Antriebsmotor 46 verbundene flexible Welle 48''. Zum Andrücken bzw. Abheben des Reibrades 96 dient wiederum ein Schaltmagnet 98, dessen beweglicher Teil 100 über Übertragungsmittel 102 mit dem Reibrad 96 verbunden ist. Wie ebenfalls aus Fig. 5 hervorgeht, ist die untere Transportrolle 86 senkrecht zur Ebene des Aufnahmefachs 36 beweglich gelagert und federnd gegen diese Ebene gedrückt.

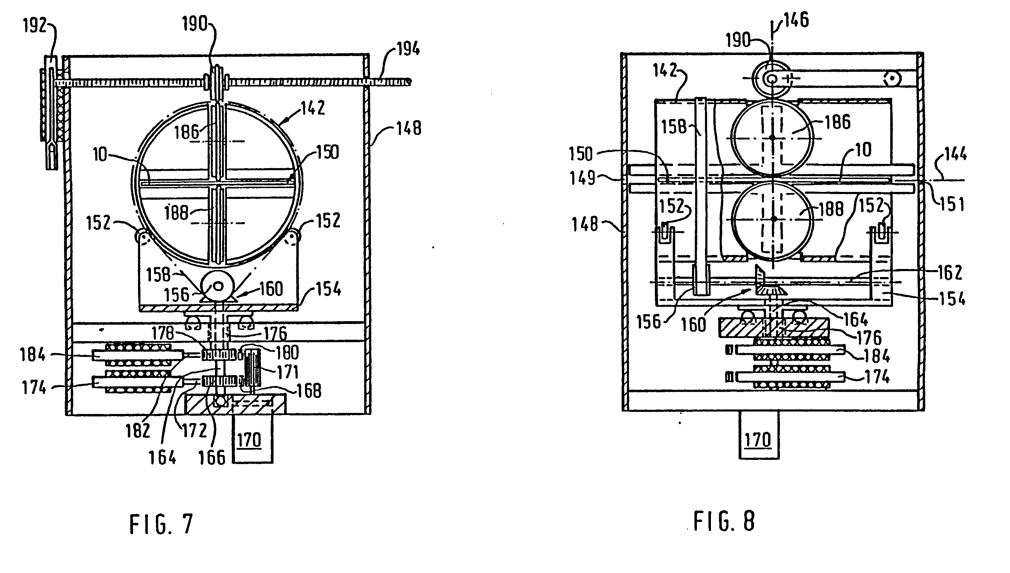

Fig. 6 zeigt ein Ausführungsbeispiel, welches ebenfalls eine als Kugel 104 ausgebildete Aufnahmekapsel zeigt, welche in einem Gehäuse 106 allseitig drehbar gelagert ist, wie beim vorigen Ausführungsbeispiel beschrieben wurde. Die Lagerung der Kugel 104 erfolgt ebenfalls wieder über Lagerkugeln 108, die genaue Lagefixierung über Rasteinrichtungen 110. Die Kugel 104 weist in der Äquatorebene eine erste Umfangsnut 110 auf, welche etwa rechteckigen Querschnitt hat. In diese greift formschlüssig ein erster Nutenstein 112 ein, welcher über eine flexible Welle 114 mit einem Antriebsmotor 116 in Verbindung steht. Eine zweite Umfangsnut 118 verläuft in einer Meridianebene. In diese greift ebenfalls formschlüssig ein Nutenstein 120 ein, welcher über eine flexible Welle 122 ebenfalls mit dem Antriebsmotor 116 verbunden ist. Die Verbindung der Antriebswellen 114 bzw. 122 mit den zugeordneten Nutensteinen 112 bzw. 120 erfolgt über in entgegengesetzter Drehrichtung kuppelnde Freiläufe 124 bzw. 126. Der Antriebsmotor 116 kann in beiden Drehrichtungen betrieben werden, wobei er in einer Drehrichtung den Nutenstein 112, in der entgegengesetzten Drehrichtung den Nutenstein 120 mitnimmt. Für eine Drehung der Kugel 104 um die in Äquatorebene liegende erste Achse 128 wird der Antriebsmotor 116 in einer Drehrichtung betrieben, bei der er über den Freilauf 124 den Nutenstein 112 verdreht, so daß er die Kugel 104 mitnimmt. Der Nutenstein 120 bewegt sich dann relativ zur Umfangsnut 118, so daß er mit dieser ständig in Eingriff bleiben kann. Entsprechend erfolgt die Drehung der Kugel 104 um die zweite Achse 130 dadurch, daß der Antriebsmotor 116 in Gegenrichtung läuft und über den Freilauf 126 den Nutenstein 120 verdreht, welcher die Kugel 104 mitnimmt. Für den Antrieb der innerhalb der Kugel 104 angeordneten Transportrollen (entsprechend dem vorbeschriebenen Ausführungsbeispiel) dient ein Reibrad 132, welches über eine Antriebswelle 134 beispielsweise mit einem antriebsmechanismus verbunden ist, welcher den Transport der Karte 10 durch die anderen Teile der Einrichtung besorgt, wie nicht näher dargestellt zu werden braucht. Zum Andrücken bzw. Abheben des Reibrades 132 von der jeweils oberen Transportrolle dient ein Schaltmagnet 136, dessen bewegliches Teil 138 über Übertragungsmittel 140 mit dem Reibrad 132 vebunden ist.

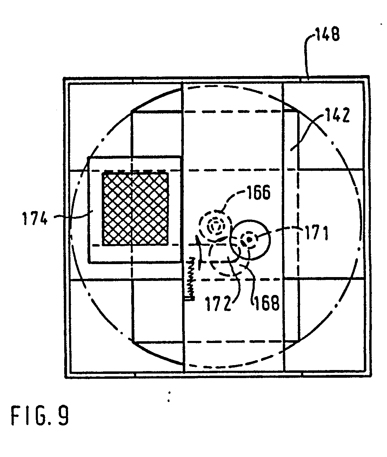

In den Fig. 7 bis 9 ist ein Ausführungsbeispiel beschrieben, bei welchem die Aufnahmekapsel als Zylinderkörper 142 ausgebildet ist. Dieser ist um seine Längsachse 144 sowie die dazu senkrecht stehende zweite Achse 146 drehbar im Gehäuse 148 gelagert. Das Gehäuse 148 hat zwei einander gegenüber liegende Schlitze 149 und 151 zum An- und Abtransport der Karte 10 zwischen der Erkennungsstation 2 und der Lesestation 6. Der Zylinderkörper 142 hat ein diesen durchdringendes schlitzförmiges Aufnahmefach 150 zur Aufnahme der Karte 10. Der Zylinderkörper 142 ist mit seiner Mantelfläche auf mehreren frei drehbaren Stützrollen 152 gelagert, die ihrerseits auf einem um die Achse 146 drehbar im Gehäuse gelagerten Traggestell 154 angeordnet sind, wie insbesondere die Fig. 7 und 8 erkennen lassen. Zur Drehung des Zylinderkörpers 142 um die Achsen 144 bzw. 146 dienen jeweils getrennt aktivierbare Drehantriebe. Der erste Drehantrieb ist als Riemenantrieb ausgebildet und umfaßt einen über den Zylinderkörper 142 sowie ein Antriebsrad 156 geführten Antriebsriemen 158. Das Antriebsrad 156 ist über eine im Traggestell 154 gelagerte Welle 162, ein Kegelradpaar 160, eine im Gehäuse 148 gelagerte Welle 164 sowie ein darauf angeordnetes Zahnrad 166 mittels eines schaltbeweglichen Zwischenritzels 168 mit einem auf der Achse des Antriebsmotors 170 angeordneten Zahnrad 171 kuppelbar. Das schaltbare Zwischenritzel 168 ist mit dem beweglichen Teil 172 eines Schaltmagneten 174 verbunden und kann durch diesen zwischen einer ausgekuppelten sowie einer eingekuppelten (siehe Fig. 9) Lage bewegt werden.

Das Traggestell 154 weist eine koaxial zur Welle 164 ausgerichtete Lagerwelle 176 auf, welche an ihrem Ende ebenfalls ein Zahnrad 178 trägt. Dieses kann über ein schaltbewegliches Zwischenritzel 180, welches auf dem beweglichen Teil 182 eines Schaltmagneten 184 angeordnet ist, mit dem Zahnrad 171 ebenfalls gekuppelt werden. Auf diese Weise lassen sich die zur Drehung des Zylinderkörpers 142 um die Achse 144 bzw. die Achse 146 dienenden Drehantriebe jeweils getrennt und wahlweise durch einen einzigen Antriebsmotor 170 betreiben, so daß die im Zylinderkörper befindliche Karte 10 aus jeder möglichen Falschlage in die richtige Leselage gedreht werden kann.

Zum Transport der Karte in der Wendeeinrichtung dienen, ähnlich wie im zuerst beschriebenen Ausführungsbeispiel, zwei Förderrollen 186, 188, die durch ein Reibrad 190 antreibbar sind. Das Reibrad 190 kann über einen Schaltmagneten 192 angedrückt bzw. abgehoben werden und ist über eine Antriebswelle 194 beispielsweise mit dem Antriebsmechanismus verbunden, welcher zum Transport der Karte durch die anderen Stationen der Einrichtung dient.

**Patentansprüche**

1. Wendeeinrichtung für einen sich im wesentlichen in Richtung einer Hauptebene erstreckenden, flachen Gegenstand, mit einer in einem Haltegestell um eine in der Hauptebene des Gegenstandes liegende Achse drehbar gelagerten, mit einem Aufnahmefach für den Gegenstand versehenen Aufnahmevorrichtung, dadurch gekennzeichnet, daß die Aufnahmevorrichtung (22) zusätzlich zu der in der Hauptebene des aufzunehmenden flachen Gegenstandes (10) liegenden Achse (40, 128, 144) um eine zur Hauptebene des Gegenstandes (10) senkrecht stehende Achse (42, 130, 146) drehbar gelagert ist.

2. Einrichtung nach Anspruch 1, dadurch gekennzeichnet, daß die Aufnahmevorrichtung (22) als Aufnahmekapsel (32, 104, 142) ausgebildet ist und daß Antriebsmittel zum Drehen der Aufnahmekapsel (32, 104, 142) vorgesehen sind.

3. Einrichtung nach Anspruch 2, dadurch gekennzeichnet, daß die Aufnahmekapsel als allseitig drehbar in einem Gehäuse (24, 106) gelagerte Kugel (32, 104) ausgebildet ist, welche in ihrer Äquatorebene ein die Kugel durchdringendes schlitzförmiges Aufnahmefach für den Gegenstand (10) aufweist, und daß die Kugel (32, 104) mit einem eine Drehung um eine in der Äquatorebene liegende erste Achse (40, 128) bewirkenden ersten Drehantrieb sowie einem eine Drehung um eine senkrecht zur Äquatorebene stehende zweite Achse (42, 130) bewirkenden zweiten Drehantrieb versehen ist, welche wahlweise betätigbar sind.

4. Einrichtung nach Anspruch 3, dadurch gekennzeichnet, daß die Drehantriebe (44, 66) jeweils mit der Kugeloberfläche in Reibeingriff bringbare, mit einem Antriebsmotor (46) in Antriebsverbindung stehende Reibräder (50, 68) umfassen.

5. Einrichtung nach Anspruch 4, dadurch gekennzeichnet, daß die Reibräder (50, 68) des ersten Drehantriebes (44) bzw. des zweiten Drehantriebes (66) über eine nacheinander zu diesen Reibrädern (50, 68) geführte flexible Antriebswelle (48, 48') mit einem einzigen Antriebsmotor (46) verbunden sind und daß Mittel zum wahlweisen Andrücken und Abheben der Reibräder (50, 68) vorgesehen sind.

6. Einrichtung nach Anspruch 3, dadurch gekennzeichnet, daß die Kugel (104) eine in der Äquatorebene angeordnete erste Umfangsnut (110) sowie eine in einer Meridianebene angeordnete zweite Umfangsnut (118) aufweist, daß in die erste Umfangsnut (110) im Bereich eines Durchstoßpunktes der ersten Achse (128) durch die Kugeloberfläche formschlüssig ein um die erste Achse (128) verdrehbar mit einem Antriebsmotor (116) für die Verdrehbewegung verbundener erster Nutenstein (112) eingreift, daß in die zweite Umfangsnut (118) im Bereich eines Durchstoßpunktes der zweiten Achse (130) durch die Kugeloberfläche formschlüssig ein um die zweite Achse (130) verdrehbarer, mit einem Antriebsmotor (116) für diese Drehbewegung verbundener zweiter Nutenstein (120) eingreift, und daß die Nutensteine (112, 120) über flexible Antriebswellen (114, 122) mit einem einzigen, in zwei Drehrichtungen betreibbaren Antriebsmotor (116) verbunden sind, wobei die Antriebswellen (114, 122) jeweils über in entgegengesetzter Drehrichtung des Antriebsmotors (116) kuppelnde Freiläufe (124, 126) mit den Nutensteinen (112, 120) antriebsverbunden sind.

7. Einrichtung nach Anspruch 2, dadurch gekennzeichnet, daß die Aufnahmekapsel als ein um seine Längsachse (144) sowie um eine dazu senkrechte zweite Achse (146) drehbar im Gehäuse (148) gelagerter Zylinderkörper (142) ausgebildet ist, welcher in einer zur zweiten Achse (146) senkrechten Längssymmetrieebene ein den Zylinderkörper (142) durchdringendes schlitzförmiges Aufnahmefach (150) für den flachen Gegenstand (10) aufweist, und daß ein erster, eine Drehung des Zylinderkörpers (142) um die Längsachse (144) sowie ein zweiter, eine Drehung um die zweite Achse (146) bewirkender Drehantrieb vorgesehen ist.

8. Einrichtung nach Anspruch 7, dadurch gekennzeichnet, daß der Zylinderkörper (142) mit seiner Mantelfläche auf mehreren frei drehbaren, eine Drehung des Zylinderkörpers (142) um seine Längsachse (144) zulassenden Stützrollen (152) oder dergleichen aufliegt, welche ihrerseits auf einem um die zweite Drehachse (146) des Zylinderkörpers (142) drehbar im Gehäuse (148) gelagerten Traggestell (154) gelagert sind, daß der erste Drehantrieb als Riemenantrieb oder dergleichen mit einem über den Zylinderkörper (142) sowie ein mit einem Antriebsmotor (170) verbindbares Antriebsrad (156) geführten Antriebsriemen (157) ausgebildet ist, und daß der zweite Drehantrieb eine am Traggestell (154) angeordnete, koaxial zur zweiten Achse (146) ausgerichtete und mit einem Antriebsmotor (170) verbindbare Lagerwelle (176) umfaßt.

9. Einrichtung nach Anspruch 8, dadurch gekennzeichnet, daß das Antriebsrad (156) des ersten Drehantriebes und die Lagerwelle (176) des zweiten Drehantriebes über schaltbare Getriebemittel (171, 168, 166; 180, 178) mit einem einzigen Antriebsmotor (170) wahlweise kuppelbar sind.

10. Einrichtung nach Anspruch 9, dadurch gekennzeichnet, daß die schaltbaren Getriebemittel jeweils ein mit dem Antriebsrad (156) des ersten Drehantriebes sowie mit der Lagerwelle (176) des zweiten Drehantriebes verbundenes Zahnrad (166, 178) umfassen, welche jeweils über ein schaltbewegliches Zwischenritzel (168, 180) mit einem auf der Achse des Antriebsmotors (170) angeordneten Zahnrad (171) kuppelbar sind, wobei die schaltbaren Zwischenritzel (168, 180) jeweils mit dem beweglichen Teil (172, 182) eines schaltbaren Elektromagneten (174, 184) verbunden sind.

11. Einrichtung nach einem der Ansprüche 3 bis 10, dadurch gekennzeichnet, daß zur exakten Lagefixierung der Aufnahmekapsel (32, 104, 142) jeweils in den verschiedenen Soll-Lagen derselben wirksame Rasteinrichtungen (82, 110) vorgesehen sind.

12. Einrichtung nach einem der Ansprüche 2 bis 11, dadurch gekennzeichnet, daß die Aufnahmekapsel (32, 104, 142) mit Transportelementen zum Transportieren des flachen Gegenstandes (10) versehen ist.

13. Einrichtung nach einem der Ansprüche 2 bis 12, gekennzeichnet durch zwei zusammenwirkende, jeweils oberhalb bzw. unterhalb des Aufnahmefaches (36, 150) innerhalb der Aufnahmekapsel (32, 142) angeordnete Transportrollen (84, 86; 186, 188), deren Drehebene senkrecht zur Ebene des Aufnahmefaches (36, 150) und in Transportrichtung ausgerichtet ist und welche jeweils einerseits bis in das Aufnahmefach (36, 150), andererseits bis zur Kapselperipherie reichen, und daß ein mit jeweils einer der Transportrollen (84, 86; 186, 188) in Eingriff bringbares, mit einem Antriebsmotor (46) antriebsverbundenes Transport- Antriebsrad (96, 132, 190) vorgesehen ist.

14. Einrichtung nach Anspruch 13, dadurch gekennzeichnet, daß das Transport-Antriebsrad (96) über eine flexible Antriebswelle (48") ebenfalls mit dem Antriebsmotor (46) der Drehantriebe verbunden ist.

15. Einrichtung nach einem der Ansprüche 2 bis 14, dadurch gekennzeichnet, daß der Wendeeinrichtung Mittel (14) zum Erkennen der Lage des flachen Gegenstandes (10), sowie zur Ansteuerung der Antriebsmittel zum Drehen der Aufnahmekapsel (32, 104, 142) zugeordnet sind.

16. Einrichtung nach Anspruch 15, dadurch gekennzeichnet, daß die Mittel zum Erkennen der Lage des flachen Gegenstandes (10) mehrere in einer Erkennungsstation (2) angeordnete Erkennungssensoren (14) umfassen, von denen jeder bei einer bestimmten Lage des flachen Gegenstandes (10) mit einer daran angeordneten Markierung (16) zusammenwirkt.

17. Einrichtung nach einem der Ansprüche 4 bis 16 dadurch gekennzeichnet, daß für einen rechteckig ausgebildeten flachen Gegenstand, beispielsweise eine Datenträger-Karte, die Aufnahme kapsel (32, 104, 142) um jede Drehachse (40, 42; 128, 130; 144, 146) in zwei um jeweils 180° verschiedene Positionen einstellbar ist.

**Claims**

1. A turning mechanism for a flat object extending substantially in the direction of a principal plane, comprising a receiving attachment supported within a holding frame for rotational movement about an axis located in the principal plane of said object and provided with a receiving box for receiving said object, characterized in that the receiving attachment (22), apart from being supported for rotational movement about the axis (40, 128, 144) located in the principal plane of the flat object (10) to be received, is further supported for rotational movement about an axis (42, 130, 146) perpendicular to the principal plane of said object (10).

2. A mechanism as claimed in Claim 1, characterized in that said receiving attachment (22) is constructed in the form of a receiving capsule (32, 104, 142), and that there are provided driving elements for rotation of said receiving capsule (32, 104, 142).

3. A mechanism as claimed in Claim 2, characterized in that said receiving capsule is constructed in the form of a globe (32, 104) supported rotatably in any direction in a housing (24, 106) and having in its equatorial plane a slot-shaped receiving box for reception of the object (10), said receiving box extending through said globe, and that said globe (32, 104) is provided with a first rotation drive effecting rotation about a first axis (40, 128) located in the equatorial plane, as well as a second rotation drive effecting rotation about a second axis (42, 130), which second axis is perpendicular to the equatorial plane, said rotation drives being selectively actuable.

4. A mechanism as claimed in Claim 3, characterized in that said rotation drives (44, 66) comprise respectively friction wheels (50, 68) which can be brought in friction engagement with the surface of said globe and are engaged in driving connection with a driving motor (46).

5. A mechanism as claimed in Claim 4, characterized in that said friction wheels (50, 68) of said first rotation drive (44) and of said second rotation drive (66) are connected with a single driving motor (46) via a flexible driving shaft (48, 48') conducted successively to said friction wheels (50, 68), and that there are provided means for selectively pressing down and lifting said friction wheels (50, 68).

6. A mechanism as claimed in Claim 3, characterized in that said globe (104) has a first peripheral groove (110) positioned in the equatorial plane as well as a second peripheral groove (118) positioned in a meridian plane, that a first groove stone (112) connected for rotational movement about the first axis (128) with a driving motor (116) for effecting such rotational movement engages in a form-fitting manner with said first peripheral groove (110) in the region of a point of penetration of said first axis (128) through the surface of said globe, that a second groove stone (120) connected for rotational movement about the second axis (130) with a driving motor (116) effecting such rotational movement engages in a formfitting manner with said second peripheral groove (118) in the region of a point of penetration of said second axis (130) through the surface of said globe, and that said groove stones (112, 120) are connected, via flexible driving shafts (114, 122), with a single driving motor (116) which can be driven in two directions of rotation, wherein said driving shafts (114, 122) are engaged in driving connection with said groove stones (112, 120) respectively via freewheels (124, 126) respectively coupling in the opposite directions of said driving motor (116).

7. A mechanism as claimed in Claim 2, characterized in that the receiving capsule is constructed in the form of a cylindrical body (142) supported in the housing (148) for rotational movement about its longitudinal axis (144) as well as a second axis (146) perpendicular thereto, said cylindrical body including in a longitudinal plane of symmetry perpendicular to said second axis (146) a slot-shaped receiving box (150) for reception of the flat object (10), which receiving box extends through said cylindrical body (142), and that there is provided a first rotation drive effecting rotation of said cylindrical body (142) about said longitudinal axis (144), as well as a second rotation drive effecting rotation about said second axis (146).

8. A mechanism as claimed in Claim 7, characterized in that said cylindrical body (142) is supported with its surface on several freely rotatable backing rolls (152), or the like, permitting a rotation of said cylindrical body (142) about the longitudinal axis (144) thereof, which backing rolls are, in turn, supported on a holding frame (154) supported in the housing (148) for rotational movement about the second axis of rotation (146) of said cylindrical body (142), that the first rotation drive is a belt drive, or the like, comprising a driving belt (157) guided over said cylindrical body (142) as well as a drive wheel (156) which can be connected with a driving motor (170), and that said second rotation drive comprises a supporting shaft (176) which is arranged on said holding frame (154) in coaxial relation to said second axis (146) and connected with a driving motor (170).

9. A mechanism as claimed in Claim 8, characterized in that said drive wheel (156) of said first rotation drive and said supporting shaft (176) of said second rotation drive can be selectively coupled with a single driving motor (170) via shiftable gear elements (171, 168, 166; 180, 178).

10. A mechanism as claimed in Claim 9, characterized in that said shiftable gear elements comprise respectively a gear wheel (166, 178) connected with said drive wheel (156) of said first rotation drive as well as said supporting shaft (176) of said second rotation drive, which gear wheels can be coupled respectively via a shiftable intermediate pinion (168, 180) with a gear wheel (171) arranged on the axis of the driving motor (170), wherein said shiftable intermediate pinions (168, 180) are connected respectively with the movable part (172, 182) of a switchable electromagnet (174, 184).

11. A mechanism as claimed in any one of Claims 3 to 10, characterized in that for accurately fixing the position of the receiving capsule (32, 104, 142) there are provided arresting means (82, 110) respectively effective in various desirable positions thereof.

12. A mechanism as claimed in any one of Claims 2 to 11, <u>characterized in that</u> said receiving capsule (32, 104, 142) is provided with transport elements for transporting said flat object (10).

13. A mechanism as claimed in any one of Claims 2 to 12, <u>characterized by</u> two interacting transport rolls (84, 86; 186, 188) arranged respectively above and below said receiving box (36, 150) within said receiving capsule (32, 142), the plane of rotation of said transport rolls being perpendicular to the plane of said receiving box (36, 150) and oriented in transport direction, and said transport rolls extending, on the one hand, as far as into said receiving box (36, 150), and on the other hand, as far as to the capsular periphery, and that there is provided a transport-drive wheel (96, 132, 190) which can be engaged respectively with one of said transport rolls (84, 86; 186, 188) and which engages in driving connection with a driving motor (46).

14. A mechanism as claimed in Claim 13, <u>characterized in that</u> said transport -drive weheel (96) is also connected with the driving motor (46) of the rotation drives via a flexible driving shaft (48").

15. A mechanism as claimed in any one of Claims 2 to 14, <u>characterized in that</u> said turning mechanism is associated with means (14) for detecting the position of said flat object (10) as well as for actuating the drive means for rotation of said receiving capsule (32, 104, 142).

16. A mechanism as claimed in Claim 15, <u>characterized in that</u> said means for detecting the position of said flat object (10) include several detection sensors (14) arranged in a detection station (2), each of said detection sensors interacting with a marking (16) attached on said flat object (10) when said flat object (10) is in a predetermined position.

17. A mechanism as claimed in any one of Claims 4 to 16, <u>characterized in that</u> for a flat object in rectangular shape, for instance, a data carrier card, said receiving capsule (32, 104, 142) can be adjusted in two positions respectively differing by 180°, about each of the rotation axes (40, 42; 128, 130; 144, 146).

**Revendications**

1. - Dispositif de retournement pour un objet plat s'étendant sensiblement dans le sens d'un plan principal, comportant un dispositif de réception muni d'un compartiment de reception pour l'objet et monté à rotation autour d'un axe situé dans le plan principal dans un bâti de retenue, caractérisé en ce que le dispositif de réception (22), en plus d'être monté à rotation autour de l'axe (40, 128, 144) situé dans le plan principal de l'objet plat (10) à recevoir, est monté à rotation autour d'un axe (42, 130, 146) perpendiculaire au plan principal de l'objet (10).

2. - Dispositif selon la revendication 1, caractérisé en ce que le dispositif de réception (22) est réalisé sous forme de capsule de réception (32, 104, 142) et en ce qu'on prévoit des moyens d'entraînement pour faire tourner la capsule de réception (32, 104, 142).

3. - Dispositif selon la revendication 2, caractérisé en ce que la capsule de réception est réalisée sous forme de sphère (32, 104) pouvant tourner de tous les Côtés dans un carter (24, 106) laquelle comporte dans son plan équatorial un compartiment de réception en forme de fente pour l'objet (10) traversant la sphère, et en ce que la sphère (32, 104) est munie d'un premier mécanisme d'entraînement en rotation provoquant une rotation autour d'un premier axe (40, 128) situe dans le plan équatorial, ainsi que d'un second mécanisme d'entraînement en rotation provoquant une rotation autour d'un second axe (42, 130) perpendiculaire au plan équatorial, les deux mécanismes pouvant être actionnés au choix.

4. - Dispositif selon la revendication 3, caractérisé en ce que les mécanismes d'entraînement en rotation (44, 66) comportent respectivement des galets de friction (50, 68) pouvant être amenés en prise par friction avec la surface de la sphère et se trouvant en relation d'entraînement avec un moteur d'entraînement (46).

5. - Dispositif selon la revendication 4, caractérisé en en ce que les galets de friction (50, 68) du premier mécanisme d'entraînement en rotation (44) ou du second mécanisme d'entraînement en rotation (66) sont reliés à un moteur d'entraînement unique (46) par l'intermédiaire d'un arbre d'entraînement flexible (48, 48') amené successivement à ces galets de friction (50, 68), et en ce qu'on prévoit des moyens pour appliquer et relever au choix les galets de friction (50, 68).

6. - Dispositif selon la revendication 3, caractérisé en en ce que la sphère (104) comporte une première gorge périphérique (110) disposée dans le plan équatorial, ainsi qu'une seconde gorge périphérique (118) disposée dans un plan méridien, en ce que, dans la première gorge périphérique (110) pénètre, par coopération de formes, dans la zone d'un point de traversée du premier axe (128) à travers la surface de la sphère, un premier coulisseau (112) pouvant tourner autour du premier axe (128) et relié à un moteur d'entraînement (116) pour le mouvement de rotation, en ce que dans la seconde gorge périphérique (118) pénètre, par coopération de formes, dans la zone d'un point de traversée du second axe (130) à travers la surface de la sphère, un second coulisseau (120) pouvant tourner autour du second axe (130) et relié au moteur d'entraînement (116) pour ce mouvement de rotation, et en ce que les coulisseaux (112, 120) sont reliés par l'intermédiaire d'arbres d'entraînement flexibles (114, 122) au moteur d'entraînement unique (116) pouvant être entraîné dans deux sens de rotation, les arbres d'entraînement (114, 122) étant respectivement reliés en entraînement aux coulisseaux (112, 120) par l'intermédiaire de mécanismes à roue libre (124, 126) embrayant en sens de rotation opposé du moteur d'entraînement (116).

7. - Dispositif selon la revendication 2, caractérisé en ce que la capsule de réception est réalisée sous forme d'un corps cylindrique (142) monté dans un carter (148) et pouvant tourner autour de son axe longitudinal (144) ainsi qu'autour d'un second axe (146) perpendiculaire à ce dernier, lequel corps comporte dans un plan de symétrie longitudinal perpendiculaire au second axe (146) un compartiment de réception (150) en forme de fente traversant le corps cylindrique (142) pour l'objet plat (10), et en ce qu'on prévoit un premier mécanisme d'entraînement en rotation provoquant une rotation du corps cylindrique (142) autour de l'axe longitudinal (144) ainsi qu'un second mécanisme d'entraînement en rotation provoquant une rotation autour du second axe (146).

8. - Dispositif selon la revendication 7, caractérisé en ce que le corps cylindrique (142) appuie par sa surface latérale sur plusieurs galets de soutien (152) ou l'analogue tournant librement et autorisant une rotation du corps cylindrique (142) autour de son axe longitudinal (144), lesquels galets, de leur côté, sont montés sur un bâti porteur (154) monté à rotation dans le carter (148) autour du second axe de rotation (146) du corps cylindrique (142), en ce que le premier mécanisme d'entraînement en rotation est réalisé sous forme d'un entraînement par courroie ou l'analogue comportant une courroie d'entraînement (157) passant sur le corps cylindrique (142) et sur une poulie d'entraînement (156) pouvant être reliée à un moteur d'entraînement (170), et en ce que le second mécanisme d'entraînement en rotation comporte un arbre (176) disposé sur le bâti porteur (154), orienté coaxialement au second axe (146) et pouvant être relié au moteur d'entraînement (170).

9. - Dispositif selon la revendication 8, caractérisé en ce que la poulie d'entraînement (156) du premier mécanisme d'entraînement en rotation et l'arbre (176) du second mécanisme d'entraînement en rotation peuvent être couplés au choix avec un moteur d'entraînement unique (170) par l'intermédiaire de moyens de transmission coummutables (171, 168, 166; 180, 178).

10. - Dispositif selon la revendication 9, caractérisé en ce que les moyens de transmission commutables comportent respectivement une roue dentée (166, 178) reliée à la poulie d'entraînement (156) du premier mécanisme d'entraînement en rotation ainsi qu'à l'arbre (176) du second mécanisme d'entraînement en rotation, lesquelles roues dentées peuvent être couplées respectivement, par l'intermédiaire d'un pignon intermédiaire (168, 180) pouvant être déplacé par une commande, avec une roue dentée (171) disposée sur l'axe du moteur d'entraînement (170), les pignons intermédiaires (168, 180) commandables étant respectivement reliés à la partie mobile (172, 182) d'un électroaimant commandable (174, 184).

11. - Dispositif selon l'une des revendications 3 à 10, caractérisé en ce qu'on prévoit pour fixer avec précision la capsule de réception (32, 104, 142) des dispositifs d'encliquetage (82, 110) efficaces dans les différentes positions de consigne de celle-ci.

12. - Dispositif selon l'une des revendications 2 à 11, caractérisé en ce que la capsule de réception (32, 104, 142) est munie d'éléments de transport pour transporter l'objet plat (10).

13. - Dispositif selon l'une des revendications 2 à 12, caractérisé par deux galets transporteurs (84, 86; 186, 188) respectivement disposés au dessus et en dessous du compartiment de réception (36, 150) à l'intérieur de la capsule de réception (32, 142), galets dont le plan de rotation est orienté perpendiculairement au plan du compartiment de réception (36, 150) et dans le sens du transport, ces galets allant respectivement d'une part jusque dans le compartiment de réception (36, 150) et d'autre part jusqu'à la périphérie de la capsule, un galet d'entraînement de transport (96, 132, 190) étant prévu, lequel est relié par entraînement à un moteur d'entraînement (46) et peut être amené en prise avec respectivement l'un des galets transporteurs (84, 86; 186, 188).

14. - Dispositif selon la revendication 13, caractérisé en ce que le galet d'entraînement de transport (96) est également relié au moteur d'entraînement (46) des mécanismes d'entraînement en rotation par l'intermédiaire d'un arbre d'entraînement flexible (48'').

15. - Dispositif selon l'une des revendications 2 à 14, caractérisé en ce qu'on associe au dispositif de retournement des moyens (14) pour détecter la position de l'objet plat (10) ainsi que pour commander les moyens d'entraînement afin de faire tourner la capsule de réception (32, 104, 142).

16. - Dispositif selon la revendication 15, caractérisé en ce que les moyens pour détecter la position de l'objet plat (10) comportent plusieurs détecteurs (14) disposés dans un poste de détection (2), dont chacun coopère, pour une position déterminée de l'objet plat (10), avec une marque placée sur celui-ci.

17. - Dispositif selon l'une des revendications 4 à 16, caractérisé en ce que, pour un objet plat de forme rectangulaire, par exemple une carte support de données, la capsule de réception (32, 104, 142) peut être réglée dans deux positions différentes chaque fois de 180°, autour de chaque axe de rotation (40, 42; 128, 130; 144, 146).

0 118 730

FIG. 1

FIG. 6

1

FIG. 2

FIG. 3

0118730

FIG. 5

FIG. 4

FIG. 8

FIG. 7

FIG. 9